# EUROPÄISCHE PATENTSCHRIFT

(11) **EP 0 734 499 B1**
(45) Veröffentlichungstag und Bekanntmachung des Hinweises auf die Patenterteilung: **22.10.1997**
(21) Anmeldenummer: 95904435.5
(22) Anmeldetag: 08.12.1994
(51) Int. Cl.: F16L 47/00

(54) **VERFAHREN ZUM ANBOHREN EINER LEITUNG UND ANBOHRSCHELLE ZUR DURCHFÜHRUNG DES VERFAHRENS**
METHOD OF BROACHING A LINE AND PIPE BROACHING UNIT FOR CARRYING OUT THE METHOD
PROCEDE DE BRANCHEMENT D'UNE CONDUITE ET ELEMENT DE BRANCHEMENT POUR REALISER CE PROCEDE

(30) Priorität: 14.12.1993 CH 3728/93
(43) Veröffentlichungstag der Anmeldung: 02.10.1996
(73) Patentinhaber: WAVIN B.V., NL-8011 CW Zwolle (NL)
(72) Erfinder: AMACHER, Urs, CH-4556 Aeschi (CH); KÖSTRING, Volker, D-49767 Twist (DE)
(74) Vertreter: Patentanwaltsbüro Feldmann AG
(86) Internationale Anmeldenummer: EP9404083
(87) Internationale Veröffentlichungsnummer: WO9516874

(56) Entgegenhaltungen:
- EP-A- 0 572 817
- WO-A-93/16319
- US-A- 3 756 261

## Beschreibung

Die vorliegende Erfindung betrifft ein Verfahren zur Herstellung einer Verbindung zwischen einer ein Medium führenden Hauptleitung und einer Abgangsleitung mittels einer Anbohrschelle, die eine in einem Bohrerführungsstutzen angeordneten Zustellhülse und einen in dieser angeordneten Bohrer aufweist.
Ferner betrifft die Erfindung eine Anbohrschelle zur Durchführung des Verfahrens.

Eine derartige Verbindung ist notwendig, wenn an eine Hauptleitung, die beispielsweise Wasser oder Gas führt, eine Abgangsleitung zu einem Verbraucher erstellt werden soll. Da das Medium auch während dem Bohrvorgang in der Hauptleitung unter Druck steht, muss der Dichtheit gegenüber der Umwelt und gegenüber der Abgangsleitung besondere Beachtung geschenkt werden. Deshalb werden Anbohrschellen eingesetzt. Diese weisen zwei Halbschalen auf, die die Hauptleitung umfassen, und einen über einer dieser Halbschalen angeordneten Stutzen, in dem ein Bohrer angeordnet ist. Nach Herstellung einer Schweissverbindung zwischen Anbohrschelle und Hauptleitung wird durch Drehen des Bohrers die Rohrwand der Hauptleitung durchbohrt, um so die gewünschte Verbindung zwischen dem Rohr der Hauptleitung und der Abgangsleitung zu schaffen. Auch während diesen Arbeiten muss ein Austreten des Mediums verhindert werden. Das bedeutet, dass vorallem während dem Bohren und nach dem Zurückdrehen des Bohrers die Anbohrschelle als Dichtung gegenüber der Abgangsleitung und der Umwelt dient.

Die bisher verwendeten Verfahren und somit auch die bisher eingesetzten Anbohrschellen berücksichtigen zwar diese Forderung, können jedoch die Dichtheit nicht gewährleisten.

Eine Anbohrschelle bekannter Art beinhaltet einen Bohrer, der einen Aufsatz aus Kunststoff aufweist. Dieser Aufsatz wird gemeinsam mit dem Bohrer durch Drehen im Stutzen verschoben. Am Aufsatz ist ein Dichtring vorgesehen, der zwar während und nach dem Bohren die Hauptleitung gegenüber der Umwelt einigermassen abdichtet, die Abgangsleitung jedoch nicht verschliesst. Da der Bohrer plus Aufsatz relativ hoch ist, weist der Stutzen eine grosse Bauhöhe auf. Dies ist vorallem in denjenigen Ländern nachteilig, die nur eine sehr kleine Deckung über den Leitungen vorschreiben. Zudem befinden sich oft mehrere Leitungen in einem Graben. Der zur Verfügung stehende Platz für den Einbau einer Anbohrschelle ist also stets beschränkt.

Aus der Offenlegungsschrift DE-A-3'723'898 ist eine Anbohrschelle bekannt, die im Innern des Stutzens eine zylindrische Hülse aufweist. Diese Hülse ist dicht und verdrehsicher im Stutzen verankert. In ihrem unteren, dem Rohr der Hauptleitung zugewandten Teil weist sie ein Innengewinde auf. In ihrem oberen, dem Rohr abgewandten Teil ist ihre Innenfläche glatt. Der Bohrer, der mit einem Aussengewinde versehen ist, wird durch Drehen in dieser Hülse verschoben. Dabei liegt er mit einem oberen Dichtungsring stets dicht an der glatten Innenfläche der Hülse an. Diese Anbohrschelle gewährleistet zwar eine Dichtung gegenüber der Umwelt. Die Abgangsleitung ist aber auch in dieser Ausführungsform mangelhaft geschlossen. Auch ein sicheres Schliessen zu einem späteren Zeitpunkt ist fraglich, da das entnommene Bohrstück kaum identisch in die Bohrstelle eingesetzt werden kann.

Ein derartiges Schliessen zu einem späteren Zeitpunkt ist erforderlich, wenn eine Abgangsleitung vorübergehend oder definitiv stillgelegt werden soll. Da keine der bekannten Anbohrschellen mit hoher Zuverlässigkeit die Abgangsleitung abdichten kann, wird stets in der Abgangsleitung, anschliessend an die Anbohrschelle, ein Ventil eingebaut, das beispielsweise mittels einem Schieber einen dichten Unterbruch herstellen kann.

Es ist deshalb Aufgabe der vorliegenden Erfindung, ein Verfahren zur Herstellung einer Verbindung zwischen einer Hauptleitung und einer Abgangsleitung zu schaffen, bei dem die Hauptleitung gegenüber der Abgangsleitung und gegenüber der Umwelt abgedichtet ist.

Diese Aufgabe löst ein Verfahren mit den Merkmalen des Patentanspruchs 1.

Es ist eine weitere Aufgabe der Erfindung, ein Mittel zur Durchführung des Verfahrens zu schaffen, wobei das Mittel ebenfalls Ventilfunktion übernehmen soll.

Diese Aufgabe löst eine Anbohrschelle mit den Merkmalen des Patentanspruches 4.

Das erfindungsgemässe Verfahren arbeitet mit einer Anbohrschelle, die eine teleskopartige Bohreinheit, bestehend aus einer Zustellhülse und einem Bohrer, aufweist. Die Zustellhülse wird beim erfindungsgemässen Verfahren an diejenige Stelle gebracht, an der eine Dichtung am effizientesten ist, nämlich an den Ort der Bohrung. Dadurch dichtet die Zustellhülse die Hauptleitung nicht nur gegenüber der Umwelt ab, wie bei den bekannten Anbohrschellen, sondern auch gegenüber der Abgangsleitung. Gleichzeitig bringt sie den Bohrer an die anzubohrende Stelle der Hauptleitung. Da Zustellhülse und Bohrer gemeinsam verschoben werden und erst beim effektiven Bohrvorgang auseinandergeschraubt werden, weisen sie bei Nichtgebrauch eine relativ kleine gemeinsame Bauhöhe auf. Der Bohrerführungsstutzen und damit die Anbohrschelle können demzufolge relativ klein ausgeführt werden. Die Grösse wird nur noch durch die Durchmesser der Haupt- und Abgangsleitung bestimmt.
Die erfindungsgemässe Anbohrschelle kann zu jedem Zeitpunkt auch als Ventil eingesetzt werden. Ein zusätzlich in die Abgangsleitung eingebautes Bauteil mit Ventil erübrigt sich somit.

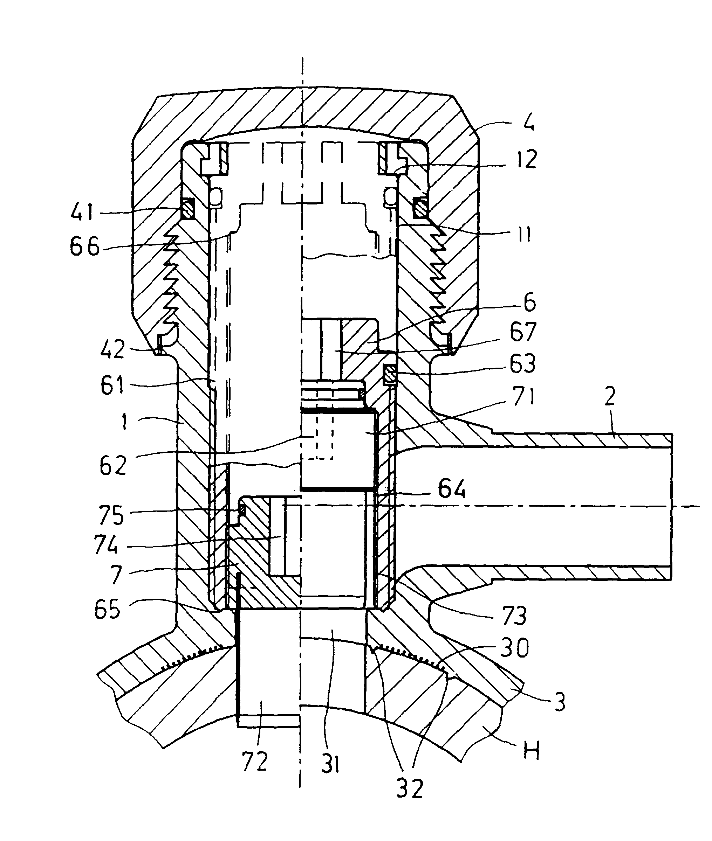

In der Zeichnung ist ein Ausführungsbeispiel des Erfindungsgegenstandes dargestellt und in der nachfolgenden Beschreibung erläutert.

Die einzige Figur zeigt den erfindungswesentlichen Teil einer Anbohrschelle im Schnitt, wobei auf der linken Seite Zustellhülse und Bohrer in der untersten Position beim Anbohren dargestellt sind und auf der rechten Seite der Bohrer vollständig in die Zustellhülse eingeschraubt ist. Auf beiden Seiten ist zudem die Zustellhülse gestrichelt in ihrer obersten Anschlagsposition im Bohrerführungsstutzen dargestellt.

Im folgenden wird zuerst die Anbohrschelle beschrieben, die als Mittel zur Verwendung des erfindungsgemässen Verfahrens eingesetzt wird. Anschliessend wird anhand dieses Mittels das Verfahren erläutert.

Es werden die Begriffe oben und unten verwendet. Als oben wird der von der anzubohrenden Hauptleitung abgewandte Teil der Anbohrschelle bezeichnet, als unten der der Hauptleitung zugewandte Teil. Die Begriffe beschreiben nicht die Einbaulage der Anbohrschelle, die je nach Lage der Leitung und des vorhandenen Raumes unterschiedlich sein kann.

Die Anbohrschelle zur Durchführung des Verfahrens weist einen Bohrerführungsstutzen 1, einen Anschlussstutzen 2 und je nach Montageart ein oder zwei Halbschalen 3 auf.
Die Halbschalen 3 umfassen das Rohr der Hauptleitung H in einem Fall vollständig, im anderen Fall nur teilweise. Sie werden mit den üblichen Mitteln am Rohr befestigt. Die eine, hier teilweise dargestellte Halbschale 3 weist einen Widerstandsdraht 30 zur schweissbaren, dichten Verbindung mit der Hauptleitung H auf. Der Widerstandsdraht 30 verläuft spiralförmig in mehreren Windungen um eine Durchgangsöffnung 31, deren Durchmesser mindestens dem Durchmesser einer weiter unten beschriebenen Bohrerkrone entspricht.

Die Lage des Widerstandsdrahtes 30 definiert eine ringförmige Schweisszone, an der Anbohrschelle und Rohr durch Schweissen miteinander verbunden werden. Als Schmelzrückhaltesperre ist innerhalb und ausserhalb des Schweisszonenringes je eine umlaufende Dichtlippe 32 angeordnet.

Zentrisch über dieser Durchgangsöffnung 31 ist der Bohrerführungsstutzen 1 angeordnet, wobei er einen grösseren Innendurchmesser als diese aufweist, so dass die Halbschale 3 innerhalb des Stutzens einen ringförmigen Absatz bildet. Der Bohrerführungsstutzen 1 weist ein Innengewinde mit relativ grosser Steigung auf, das sich bis ans untere Ende erstreckt.

Im oberen Bereich geht das Innengewinde in eine glatte, ebene zylindrische Innenfläche 11 über. In diesem Bohrerführungsstutzen 1 sind ein Bohrer 7 zum Anbohren der Hauptleitung H und eine Zustellhülse 6 für den Bohrer angeordnet. Diese werden später ausführlich beschrieben. Der Bohrerführungsstutzen 1 weist an seinem oberen Ende einen Anschlag 12 auf, der in diesem Beispiel aus einem in einer Ringnut eingesetzten Sprengring gebildet ist. Der Anschlag kann in einer anderen Ausführungsform auch durch einen zusätzlichen, teilweise offenen Deckel erhalten werden, der auf dem Bohrerführungsstutzen aufgeschweisst ist oder der mittels Einrastorganen irreversibel mit diesem verbindbar ist. Dadurch können Bohrer 7 und Zustellhülse 6 nicht entfernt werden. Der Bohrerführungsstutzen 1 ist oben mit einem schraubbaren Verschlussdeckel 4 verschliessbar. Als zusätzliche Dichtung ist zwischen Bohrerführungsstutzen 1 und Verschlussdeckel 4 ein Dichtring 41 vorgesehen, der in einer in der Aussenfläche des Bohrerführungsstutzens 1 angebrachte Ringnut eingelegt ist. Aus Sicherheitsgründen sind am Bohrerführungsstutzen 1 und am Verschlussdeckel 4 Einrastelemente 42 angebracht, die nach dem Festziehen des Verschlussdeckels ein Abschrauben von Hand verunmöglichen.

Senkrecht zum Bohrerführungsstutzen 1 ist ein Anschlussstutzen 2 angeordnet. In anderen Ausführungsformen schliesst der Anschlussstutzen 2 mit dem Bohrerführungsstutzen 1 einen Winkel ein. Er dient als Uebergangsstück zu einer, hier nicht dargestellten, Abgangsleitung. Der Anschlussstutzen 2 mündet knapp oberhalb der Halbschale 3 in den Bohrerführungsstutzen 1. Die bisher beschriebenen Bestandteile der Anbohrschelle sind, bis auf den Widerstandsdraht 30 und der Bohrkrone, aus Kunststoff gefertigt.

Die teleskopartige Bohrvorrichtung ist im Bohrerführungsstutzen 1 angeordnet. Sie besteht aus einer im Bohrerführungsstutzen 1 beweglichen, zylinderförmigen Zustellhülse 6 und einem Bohrer 7.
Die Zustellhülse 6 ist vollständig aus Kunststoff gefertigt. Sie weist ein Aussengewinde, das Zustellgewinde 61, auf, das sich bis auf einen nachfolgend beschriebenen oberen Teil über ihre gesamte Länge erstreckt und das das Innengewinde des Bohrerführungsstutzens 1 kämmt. Oberhalb des Zustellgewindes 61 ist ein Dichtring 63, in diesem Fall ein O-Ring, angeordnet. Der Dichtring 63 ist in einer Ringnut gehalten und dichtet auf der glatten Innenfläche 11 des Bohrerführungsstutzens 1. An ihrem unteren Ende weist die Zustellhülse 6 eine weitere Dichtung in Form einer umlaufenden spitzen Dichtkante 65 auf. Die Wirkungsweise wird später erläutert. Die Zustellhülse 6 weist im Innern ein Innengewinde auf, das eine kleinere Steigung als das Aussengewinde 61 besitzt. Das Innengewinde erstreckt sich ebenfalls bis ans untere Ende der Zustellhülse 6. Die Oeffnung 67 am oberen Ende der Zustellhülse 6 ist in dieser Ausführungsform ein doppelter Innenvierkant.

Der Bohrer 7 ist in der Zustellhülse 6 schraubbar gelagert und in ihr ein- und aus ihr ausdrehbar. Er besteht aus einem Bohrschaft 71 und einer Bohrkrone 72. Die Bohrkrone 72 weist einen kleineren Durchmesser als der Bohrschaft 71 auf.

Der Bohrschaft 71 ist wie die Zustellhülse 6 aus Kunststoff gefertigt. Der Bohrschaft 71 weist zur schraubbaren Lagerung des Bohrers ein dem Innengewinde der Zustellhülse 6 entsprechendes Aussengewinde, das Bohrergewinde 73, auf. Oberhalb des Bohrergewindes 73 weist der Bohrschaft 71 eine Ringnut auf, in der ein Dichtring 75, hier wiederum ein O-Ring, angeordnet ist. Ebenfalls im Bohrschaft 71 ist ein Innensechskant 74 vorhanden, das als Mittel für einen Formschluss mit einem von aussen durch Bohrerführungsstutzen 1 und Zustellhülse 6 einführbares Werkzeug dient. Mittels diesem Werkzeug werden Bohrer 7 und Zustellhülse 6 gemeinsam getrieben.

Bohrer 7 und Zustellhülse 6 sind mittels einer Friktionskupplung 66 miteinander fixierbar. Bohrer und Zustellhülse weisen hierfür Rippen und Noppen auf, die die notwendige Haftreibung erzeugen. Die Kupplung greift, wenn der Bohrer 7 bis zu einem oberen Bohreranschlag in die Zustellhülse 6 eingedreht ist. Bevorzugterweise ist dann der Bohrer 7 vollständig von der Zustellhülse 6 umgeben. Um die Friktionskupplung noch zu unterstützen, kann in einer weiteren Ausführungsform das Bohrergewinde 73 hinterschnitten werden, um so eine Haftreibung zu erzeugen.

Im folgenden wird das Verfahren anhand der einzelnen, in der Figur ersichtlichen Positionen von Zustellhülse und Bohrer erläutert. Vor dem Gebrauch der Anbohrschelle liegt der teleskopartige Bohrer mit eingedrehtem Bohrer 7 am oberen Anschlag der Zustellhülse im Bohrerführungsstutzen 1 an. Diese Position ist in der Figur gestrichelt eingezeichnet. Der Dichtungsring 63 liegt auf der glatten Innenfläche 11 des Bohrerführungsstutzens 1 an und nur das untere Ende des Zustellgewindes 61 der Zustellhülse 6 greift in das Innengewinde des Bohrerführungsstutzens 1 ein. Zustellhülse und Bohrer befinden sich oberhalb der Mündungsöffnung des Anschlussstutzens 2, so dass diese nicht verdeckt ist. Das Werkzeug wird nun in den Innensechskant 74 eingeführt. Da Zustellhülse 6 und Bohrer 7 durch die Friktionskupplung miteinander fixiert sind, können sie gemeinsam den Bohrerführungsstutzen 1 entlang hinuntergedreht werden. Sind sie am unteren Ende des Bohrerführungsstutzen 1 angekommen, kommt die Zustellhülse 6 nun auf den durch die Halbschale 3 gebildeten Absatz zu liegen. Der Verstellweg der Zustellhülse 6 ist dabei so bemessen, dass ihr Dichtring 63 in jeder ihrer Verstellpositionen an der glatten Innenfläche 11 des Bohrerführungsstutzens 1 anliegt.
Die untere Anschlagsposition der Zustellhülse ist in der Figur in der rechten Hälfte ersichtlich. Die umlaufende Dichtkante 65 der Zustellhülse 6 bohrt sich dabei in die Halbschale 3, so dass eine dichte Verbindung entsteht. Wird der Bohrer mittels dem Werkzeug weiter gedreht, so wird die Haftreibung der Friktionskupplung 66 überwunden und er bewegt sich ohne die Zustellhülse weiter nach unten. Mit dem Bohrer 7 kann nun die Hauptleitung angebohrt werden. Da die Dichtkante 65 der Zustellhülse 6 eine Dichtung gewährleistet, kann das in der Hauptleitung geführte Medium weder in den Anschlussstutzen 2 noch in die Umwelt entweichen. Zudem liegt der Dichtring 63 der Zustellhülse 6 oberhalb der Mündungsöffnung des Anschlussstutzens 2 an der glatten Innenfläche 11 an und bildet so eine absolute Dichtung.

Da der Bohrschaft 71 des Bohrers 7 ebenfalls auf den durch die Halbschale 3 gebildeten Absatz aufsteht, kann der Bohrer 7 nicht vollständig aus der Zustellhülse 6 ausgedreht werden. Ist diese untere Bohreranschlagposition erreicht, so ist auch die Hauptleitung vollständig angebohrt. Diese Position ist in der Figur in der linken Hälfte dargestellt. Der Bohrer 7 lässt sich nun wieder in die Zustellhülse 6 zurückdrehen bis zu seiner oberen Bohreranschlagsposition. Hierbei ist die Hauptleitung immer noch abgedichtet. In der oberen Anschlagsposition wird der Bohrer 7 mit der Zustellhülse 6 über die Friktionskupplung fixiert. Der Dichtring 75 des Bohrers 7 liegt nun an der glatten Innenfläche oberhalb des Gewindes der Zustellhülse 6 an und übernimmt eine zusätzliche Dichtfunktion. Zustellhülse 6 und Bohrer 7 werden nun gemeinsam weiter den Bohrstutzen 1 hinauf gedreht. Dabei gewährleistet der Dichtring 63 der Zustellhülse 6 in jeder Position die Dichtheit. Beim Hinaufdrehen der Zustellhülse wird nun die Mündungsöffnung des Anschlussstutzens 2 freigegeben. Die gewünschte Verbindung ist somit hergestellt, ohne dass zu irgendeinem Zeitpunkt das Medium durch den Bohrerführungsstutzen 1 in die Umgebung abgegeben werden konnte. Die Zustellhülse 6 wird wieder gemeinsam mit dem Bohrer 7 bis zu ihrer oberen Anschlagsposition hinaufgedreht, so dass sie schliesslich die Mündungsöffnung des Anschlussstutzens vollständig freigibt. Es sind nun mehrere Dichtungen vorhanden, die verhindern, dass das Medium in die Umgebung austritt. Dies sind der Dichtring 75 des Bohrers 7 und der Dichtring 63 der Zustellhülse, die nun beide auf glatten Innenflächen aufliegen, und zudem der Verschlussdeckel 4 mit seinem Dichtring 41, der nun wieder auf den Bohrerführungsstutzen 1 aufgeschraubt werden kann. In der oberen und unteren Anschlagsposition sind also aus Sicherheitsgründen zusätzliche Dichtungsmittel vorhanden.

Bis jetzt wurde die Wirkungsweise der Anbohrschelle beim Anbohren eines Rohres einer Hauptleitung beschrieben. Die Anbohrschelle kann aber auch als Ventil eingesetzt werden. Das heisst, es ist nicht mehr notwendig, anschliessend an die Anbohrschelle ein Ventil in die Abgangsleitung einzubauen. Falls die Verbindung zwischen Abgangsleitung und Hauptleitung unterbrochen werden soll, so muss nur wieder die Zustellhülse bis in ihre untere Anschlagsposition gedreht werden, so dass die Dichtkante eine dichtende Verbindung mit der Halbschale eingeht. Dazu wird die Zustellhülse direkt mit einem eigenen Werkzeug, das in die Oeffnung 67 der Zustellhülse eingreift, hinuntergedreht.

## Patentansprüche

1. Verfahren zur Herstellung einer Verbindung zwischen einer ein Medium führenden Hauptleitung (H) und einer Abgangsleitung mittels einer Anbohrschelle, die eine in einem Bohrerführungsstutzen (1) angeordnete Zustellhülse (6) und einen in dieser angeordneten Bohrer (7) aufweist,
dadurch gekennzeichnet, dass
a) die Anbohrschelle mit der Hauptleitung (H) und der Abgangsleitung dicht verbunden wird, dass
b) Bohrer (7) und Zustellhülse (6) gemeinsam von einer oberen, der Hauptleitung abgewandten Anschlagposition, zu einer unteren, der Hauptleitung zugewandten Anschlagsposition der Zustellhülse (6) gedreht werden, wobei die Zustellhülse (6) die Hauptleitung (H) gegenüber der Abgangsleitung und der Umwelt abdichtet, dass
c) der Bohrer (7) bis zu einer unteren Bohreranschlagsposition weiter hinuntergedreht wird, wobei er die Hauptleitung (H) anbohrt, dass
d) der Bohrer (7) anschliessend bis zu einer oberen Bohreranschlagsposition in der Zustellhülse (6) hinaufgedreht wird, wobei eine dichte Verbindung zwischen Bohrer (7) und Zustellhülse (6) entsteht und dass
e) Bohrer (7) und Zustellhülse (6) gemeinsam bis zur oberen Anschlagsposition der Zustellhülse (6) den Bohrerführungsstutzen (1) hinauf gedreht werden, wobei die Verbindung zwischen Hauptleitung (H) und Abgangsleitung freigegeben wird.

2. Verfahren nach Anspruch 1, dadurch gekennzeichnet, dass Bohrer (7) und Zustellhülse (6) durch Krafteinwirkung am Bohrer (7) verschoben werden.

3. Verfahren nach Anspruch 1, dadurch gekennzeichnet, dass die Schritte b-e zu einem späteren Zeitpunkt durch Krafteinwirkung an der Zustellhülse (6) wiederholt werden.

4. Anbohrschelle zur Durchführung des Verfahrens nach Anspruch 1, die mit der anzubohrenden Hauptleitung (H) mittels einer Schweissverbindung verbindbar ist, dadurch gekennzeichnet, dass eine Zustellhülse (6) in einem Bohrerführungsstutzen (1) schraubbar und mittels einem Dichtring (63) gedichtet gelagert ist, wobei sie an ihrem unteren, der Hauptleitung (H) zugewandten Ende eine umlaufende, spitze Dichtkante (65) aufweist, und dass ein Bohrer (7) in der Zustellhülse (6) schraubbar gelagert ist.

5. Anbohrschelle nach Anspruch 4, dadurch gekennzeichnet, dass die Zustellhülse (6) mittels einem steileren Aussengewinde als der Bohrer (7) versehen ist.

6. Anbohrschelle nach Anspruch 4, dadurch gekennzeichnet, dass der Bohrer (7) vollständig und dichtend in die Zustellhülse (6) aufnehmbar ist.

7. Anbohrschelle nach Anspruch 4, dadurch gekennzeichnet, dass der Dichtring (63) der Zustellhülse (6) in ihrem oberen Bereich angeordnet ist und dass er in jeder Position der Zustellhülse (6) an einer glatten zylindrischen Innenfläche (11) des Bohrerführungsstutzens (1) dichtend anliegt.

8. Anbohrschelle nach Anspruch 4, dadurch gekennzeichnet, dass die Zustellhülse (6) so bemessen ist, dass sie in ihrer unteren Anschlagsposition im Bohrerführungsstutzen (1) die Oeffnung zur Abgangsleitung vollständig abdichtet und verdeckt und dass sie in ihrer oberen Anschlagsposition diese vollständig freigibt.

9. Anbohrschelle nach Anspruch 4, dadurch gekennzeichnet, dass der Bohrschaft (71) des Bohrers (7) massiv ausgebildet ist und im oberen Teil aussen einen in einer Ringnut gehaltenen Dichtring (75) aufweist.

10. Anbohrschelle nach Anspruch 4 zur Durchführung des Verfahrens nach Anspruch 2, dadurch gekennzeichnet, dass der Bohrschaft (71) des Bohrers (7) Mittel (74) zur formschlüssigen Verbindung mit einem Werkzeug aufweist, dass die Zustellhülse (6) und der Bohrschaft (71) des Bohrers (7) aus Kunststoff gefertigt sind und dass Zustellhülse (6) und Bohrschaft (71) mittels Friktionskupplung miteinander fixierbar sind.

11. Verwendung der Anbohrschelle nach Anspruch 4, dadurch gekennzeichnet, dass es als Ventil zum dichtenden Verschliessen der Hauptleitung eingesetzt wird.

## Claims

1. Process for producing a connection between a medium-channelling main line (H) and an output line by means of a broaching clamp which has an advancement sleeve (6), arranged in a drill-guide stub (1), and a drill (7), arranged in said advancement sleeve,
characterized in that
a) the broaching clamp is connected in a sealed manner to the main line (H) and the output line, in that
b) the drill (7) and advancement sleeve (6) are screwed together from a top stop position of the advancement sleeve (6), in which the latter is remote from the main line, to a bottom stop position of the advancement sleeve (6), in which the latter is directed towards the main line, the advancement sleeve (6) sealing the main line (H) with respect to the output line and the outside, in that
c) the drill (7) is screwed down further to a bottom drill-stop position, and broaches the main line (H) in the process, in that
d) the drill (7) is then screwed up to a top drill-stop position in the advancement sleeve (6), a sealed connection being produced between the drill (7) and the advancement sleeve (6), and in that
e) the drill (7) and advancement sleeve (6) are screwed up the drill-guide stub (1) together to a top stop position of the advancement sleeve (6), the connection between the main line (H) and output line being released in the process.

2. Process according to Claim 1, characterized in that the drill (7) and advancement sleeve (6) are displaced by the exertion of force on the drill (7).

3. Process according to Claim 1, characterized in that the steps (b-e) are repeated at a later point in time by the exertion of force on the advancement sleeve (6).

4. Broaching clamp for carrying out the process according to Claim 1, it being possible for said clamp to be connected, by means of a weld connection, to the main line (H) which is to be broached, characterized in that an advancement sleeve (6) is mounted in a drill-guide stub (1) such that it can be screwed therein and is sealed by means of a sealing ring (63), the advancement sleeve having at its bottom end, which is directed towards the main line (H), a pointed sealing edge (65) all the way around, and in that a drill (7) is mounted in the advancement sleeve (6) such that it can be screwed therein.

5. Broaching clamp according to Claim 4, characterized in that the advancement sleeve (6) is provided with a steeper external thread than the drill (7).

6. Broaching clamp according to Claim 4, characterized in that the drill (7) can be received in its entirety, in a sealing manner, in the advancement sleeve (6).

7. Broaching clamp according to Claim 4, characterized in that the sealing ring (63) of the advancement sleeve (6) is arranged in the top region of the latter, and in that, in each position of the advancement stage (6), it butts in a sealing manner against a smooth cylindrical inner surface (11) of the drill-guide stub (1).

8. Broaching clamp according to Claim 4, characterized in that the advancement sleeve (6) is dimensioned such that, in its bottom stop position in the drill-guide stub (1), it seals and conceals the opening to the output line to the full extent, and in that, in its top stop position, it releases said opening to the full extent.

9. Broaching clamp according to Claim 4, characterized in that the drilling shank (71) of the drill (7) is of solid design and in the top part, on the outside, has a sealing ring (75) retained in an annular groove.

10. Broaching clamp according to Claim 4 for carrying out the process according to Claim 2, characterized in that the drilling shank (71) of the drill (7) has means (74) for a positively locking connection to a tool, in that the advancement sleeve (6) and the drilling shank (71) of the drill (7) are produced from plastic, and in that the advancement sleeve (6) and drilling shank (71) can be fixed to one another by means of a friction coupling.

11. Use of the broaching clamp according to Claim 4, characterized in that it is used as a valve for closing the main line in a sealing manner.

## Revendications

1. Procédé pour la réalisation d'un raccordement entre une conduite principale (H) véhiculant un milieu et une conduite de sortie au moyen d'un élément de branchement, qui présente une gaine de positionnement (6), disposée dans un manchon de guidage de foret (1), et un foret (7) disposé dans cette gaine, caractérisé en ce que
a) l'élément de branchement avec la conduite principale (H) et la conduite de sortie sont reliés de façon étanche, que
b) le foret (7) et la gaine de positionnement (6) sont tournés ensemble depuis une position de butée supérieure, orientée à l'opposé de la conduite principale, jusqu'à une position de butée inférieure de la gaine de positionnement (6), tournée vers la conduite principale, tandis que la gaine de positionnement (6) rend étanche la conduite principale (H) vis-à-vis de la conduite de sortie et de l'environnement, que
c) le foret (7) est ensuite abaissé par rotation jusqu'à une position de butée inférieure du foret (7), dans laquelle il perce la conduite principale (H), que
d) le foret (7) est ensuite tourné vers le haut jusqu'à une position de butée supérieure du foret dans la gaine de positionnement (6), tandis qu'il se forme une liaison étanche entre le foret (7) et la gaine de positionnement, et que
e) le foret (7) et la gaine de positionnement (6) sont tournés ensemble vers le haut jusqu'à la position de butée supérieure de la gaine de positionnement (6) dans le manchon de guidage de foret (1), ce par quoi la liaison entre la conduite principale (H) et la conduite de sortie est libérée.

2. Procédé selon la revendication 1, caractérisé en ce que le foret (7) et la gaine de positionnement (6) sont déplacés par action d'une force sur le foret (7).

3. Procédé selon la revendication 1, caractérisé en ce que les étapes b-e sont répétées à un moment ultérieur par action d'une force sur la gaine de positionnement (6).

4. Elément de branchement pour la réalisation du procédé selon la revendication 1, qui peut être raccordé avec la conduite principale (H) à percer au moyen d'un joint soudé, caractérisé en ce qu'une gaine de positionnement (6) est disposée dans une manchon de guidage de foret (1) et rendue étanche au moyen d'une bague d'étanchéité (63), tandis qu'il présente à son extrémité inférieure, tournée vers la conduite principale (H) une arête d'étanchéité (65) aiguë, périphérique, et qu'un foret (7) est disposé avec filetage dans la gaine de positionnement (6).

5. Elément de branchement selon la revendication 4, caractérisé en ce que la gaine de positionnement (6) est munie d'un filetage extérieur plus incliné que le foret (7).

6. Elément de branchement selon la revendication 4, caractérisé en ce que le foret (7) peut être introduit en totalité et de façon étanche dans la gaine de positionnement (6).

7. Elément de branchement selon la revendication 4, caractérisé en ce que la bague d'étanchéité (63) de la gaine de positionnement (6) est disposée dans la partie supérieure de celle-ci et que, dans n'importe quelle position de la gaine de positionnement (6), elle est adjacente de façon étanche à une surface interne cylindrique plane (11) du manchon de guidage du foret (1).

8. Elément de branchement selon la revendication 4, caractérisé en ce que la gaine de positionnement (6) a des dimensions telles que, dans sa position de butée inférieure, elle étanchéifie et recouvre totalement l'ouverture de la conduite de sortie et qu'elle la libère totalement dans sa position de butée supérieure.

9. Elément de branchement selon la revendication 4, caractérisé en ce que la tige de forage (71) du foret (7) est massive et présente dans la partie supérieure, à l'extérieur, une bague d'étanchéité (75) maintenue dans une gorge annulaire.

10. Elément de branchement selon la revendication 4 pour la mise en oeuvre du procédé selon la revendication 2, caractérisé en ce que la tige de forage (71) du foret (7) présente un moyen (74) pour le raccordement avec engagement positif avec un outil, que la gaine de positionnement (6) et la tige de forage (71) du foret (7) sont réalisées en matière plastique et que la gaine de positionnement (6) et la tige de foret (71) peuvent être fixées entre elles au moyen d'un couplage à friction.

11. Utilisation de l'élément de branchement selon la revendication 4, caractérisée en ce que cet élément est employé comme soupape pour l'obturation avec étanchéité de la conduite principale.
